# EUROPÄISCHE PATENTSCHRIFT

(11) **EP 2 145 118 B1**
(45) Veröffentlichungstag und Bekanntmachung des Hinweises auf die Patenterteilung: **30.11.2011**
(21) Anmeldenummer: 08716269.9
(22) Anmeldetag: 05.03.2008
(51) Int. Cl.: F16D 41/18

(54) **DREHMOMENTEN-/DREHZAHLDIFFERENZABHÄNGIGE KUPPLUNGSBETÄTIGUNGSEINHEIT FÜR MOTORANGETRIEBENE FAHRZEUGE**
TORQUE/ROTATIONAL SPEED DIFFERENTIAL-DEPENDENT COUPLING ACTUATION UNIT FOR MOTOR-DRIVEN VEHICLES
UNITÉ D'ACTIONNEMENT D'EMBRAYAGE EN FONCTION D'UNE DIFFÉRENCE COUPLE/VITESSE POUR VÉHICULES À MOTEUR

(30) Priorität: 24.04.2007 DE 202007005899 U
(43) Veröffentlichungstag der Anmeldung: 20.01.2010
(73) Patentinhaber: Dreher Präzisionsdrehteile Gmbh, 78582 Balgheim (DE)
(72) Erfinder: STÄDELE, Helmut, 78549 Spaichingen (DE); DREHER, Ingo, 78582 Balgheim (DE)
(74) Vertreter: Vossius & Partner
(86) Internationale Anmeldenummer: PCT/EP2008/001752
(87) Internationale Veröffentlichungsnummer: WO 2008/128599

(56) Entgegenhaltungen:
- EP-A- 0 854 304
- WO-A-98/40638
- FR-A- 1 476 374
- GB-A- 2 039 635

## Beschreibung

Die Erfindung betrifft eine Kupplungsbetätigungseinheit für motorangetriebene Fahrzeuge, deren Kupplung sowohl willkürlich als auch abhängig von einer an der Kupplung auftretenden Drehmomenten-/Drehzahldifferenz betätigbar ist. Bei einem Fahrzeug, beispielsweise einem LKW, PKW, Dreirad, Quad oder einem Motorrad, erzeugt der motorische Antrieb, beispielsweise ein Verbrennungs- und/oder ein Elektro- und/oder ein Flüssigkeitsmotor oder dergleichen, ein Antriebsmoment, welches mittels eines geeigneten Antriebsstrangs zur Fortbewegung des Fahrzeugs benutzt wird. Der Antriebsstrang enthält üblicherweise eine Kupplung, zBsp. eine Reibungskupplung, welche dem motorischen Antrieb nachgeordnet ist. Daran schließt sich in Richtung des Kraftflusses ein Getriebe an, dessen Ausgangsdrehmoment ggf. unter Zwischenschaltung eines Differenzialgetriebes, bzw. eines Ketten- oder Kardanantriebes auf ein oder mehrere Antriebsräder übertragen wird.

Wenn die Antriebsleistung eines derartig ausgerüsteten Fahrzeuges reduziert wird (Schubbetrieb), erzeugt der motorische Antrieb ein negatives Antriebsmoment (Bremsmoment), welches über den Antriebsstrang auf die Antriebsräder übertragen wird. Man spricht in diesem Fall auch von einer Motorbremse bzw. Motorbremswirkung. In der Ebene hat die Massenträgheit des Fahrzeuges zur Folge, dass sich das Fahrzeug -langsamer werdend- weiterbewegt. Dabei kehrt sich die Kraftflussrichtung um, denn die Antriebsräder wirken nunmehr treibend auf den motorischen Antrieb. Wird das Getriebe in diesem Fahrzustand um einen oder mehrere Gänge herunter geschaltet, führt dies zu einer mitunter starken Drehzahlanhebung der Getriebeeingangswelle, verursacht durch die Antriebsräder. Dadurch besteht die Gefahr, dass die zulässige Motordrehzahl überschritten wird sobald der Kraftfluss durch Schließen der Kupplung wiederhergestellt wird. Das kann mitunter zu einer Beschädigung oder gar zur Zerstörung des motorischen Antriebs führen. Das kurzzeitige Blockieren der Antriebsräder ist ebenfalls möglich und kann zu einem instabilen Fahrzustand führen.

Um dies zu vermeiden, ist insbesondere bei Motorrädern eine Kupplungstechnik bekannt, die mit dem Fachbegriff Anti-Hopping-Kupplung oder slipper-clutch bezeichnet wird. Die Anti-Hopping-Kupplung ermöglicht das schnelle, quasi übergangslose Herunterschalten ohne das typische Hinterradstempeln, welches durch kurzes Blockieren des Hinterrades ausgelöst wird. Die Anti-Hopping Kupplung unterbricht den Kraftfluss an der Kupplung idealerweise bevor das Antriebsrad zum Stehen kommt. Dabei wirkt eine voreingestellte Drehmomenten-/Drehzahldifferenz zwischen dem Bremsmoment des motorischen Antriebs und dem Antriebsmoment der im Schubbetrieb antreibenden Antriebsräder kupplungsöffnend bzw. den Schlupf der Kupplung erhöhend. Das Bremsmoment des motorischen Antriebs wirkt auf denjenigen Kupplungsteil, der mit dem motorischen Antrieb verbunden ist, beispielsweise auf das Kupplungsgehäuse. Das im Schubbetrieb antreibende Moment der Antriebsräder wirkt auf denjenigen Kupplungsteil, der mit der Eingangswelle des Getriebes verbunden ist, beispielsweise auf die Kupplungsnabe oder -scheibe. Die Unterbrechung des Kraftflusses durch die Kupplung erfolgt dabei ohne Mitwirkung des Fahrers. In der Wirkung ist die Kraftflussunterbrechung einem Freilauf ähnlich, denn die Übertragung eines Antriebsmomentes ist nur in eine Richtung möglich, nämlich vom motorischen Antrieb zu den Antriebsrädern. Geht die Drehmomenten-/Drehzahldifferenz an der Kupplung gegen Null, zBsp. durch erneutes Beschleunigen des motorischen Antriebs oder durch genügendes Abbremsen des oder der Antriebsräder, kuppelt die Kupplung wieder ein und stellt den Kraftfluss wieder her.

Eine derartige kraftflussunterbrechende Anti-Hopping-Kupplung ist aus der EP 0 854 304 B1 bekannt. Zwischen einem mit der Kurbelwelle des Antriebsmotors verbundenen, rotationssymmetrischen Kupplungskorb und einer mit der Getriebeeingangswelle verbundenen, rotationssymmetrischen Kupplungsnabe sind abwechselnd außen- bzw. innenverzahnte Kupplungslamellen angeordnet, die beim Schließen der Kupplung von einer federvorgespannten Kupplungsdruckplatte in an sich bekannter Weise zusammengepresst werden. Die hier verwendete Kupplungsnabe ist zweiteilig ausgebildet und innerhalb des Kupplungskorbes angeordnet. Der innere Teil der Kupplungsnabe ist begrenzt gegenüber dem äußeren Teil drehbar. Ab einer bestimmten Momentendifferenz zwischen dem Ein- und Ausgang der Kupplung bewirkt die relative Drehbewegung des Nabeninnenteils in Verbindung mit Rampen und Gegenrampen, zwischen denen jeweils eine Kugel geführt ist, dessen begrenzte Axialbewegung in Richtung auf die Kupplungsdruckplatte. Durch diese Axialbewegung übt der innere Teil der Kupplungsnabe eine Lösekraft auf die Kupplungsdruckplatte aus, unter welcher die Kupplung drehmomentabhängig zu schlupfen beginnt bis zur vollständigen Kraftflussunterbrechung. Die zwischen den Rampen und Gegenrampen geführten Kugeln bewirken ein geringes, reproduzierbares Losbrechmoment, welches ein schlagartiges Lösen bzw. Wiedereinkuppeln unterbindet. Durch konstruktive Wahl des Neigungswinkels der Rampen kann eine gewünschte Charakteristik der Anti-Hopping-Kupplung eingestellt werden, die beispielsweise vom maximalen Drehmoment des motorischen Antriebs abhängig sein kann.

Eine ähnliche rotationssymmetrische Kupplung ist aus der WO 98/40638 A1 bekannt. Bei dieser Kupplung ist die innerhalb des Kupplungskorbes angeordnete Kupplungsnabe dreiteilig ausgebildet. Dabei ist ein mittlerer, die Kupplungslamellen innen führender Nabenteil kraft- und formschlüssig zwischen zwei weiteren Nabenteilen angeordnet, die gegenseitige Rampen und Gegenrampen aufweisen und mit dazwischen geführten Kugeln versehen sein können. Um die anfängliche Drehmomenten-/Drehzahldifferenz einzustellen, ab der eine relative Bewegung des inneren Teils der Kupplungsnabe gegenüber dem mittleren und dem äußeren Teil beginnen soll, sind alle Teile der Kupplungsnabe durch eine Schraubenfeder gegeneinander vorgespannt. Auf dem inneren Teil der Kupplungsnabe ist zudem ein Radial-Kugellager angeordnet, dessen Außenlagerschale beim drehmomentabhängigen Öffnen der Kupplung gegen ein zentrales Teil der Kupplungstellerfeder abgestützt wird.

Die wesentliche Gemeinsamkeit der beiden beschriebenen Kupplungsbetätigungskonstruktionen besteht darin, dass der An- und Abtrieb der Kupplungen, in der sie verwendet werden können mit einem zwangsläufigen Durchmesserunterschied zwischen An- und Abtrieb der Kupplung einhergeht, der durch die abwechselnd außen und innen mitgenommenen Kupplungslamellen bedingt ist. Zudem erfolgt der An- und Abtrieb der beiden bekannten Kupplungen nur von einer Seite, dh. Motor und Getriebe sind auf derselben Seite der Kupplung angeordnet. Dadurch ist die Anwendung dieser Kupplungsbetätigungskonstruktionen nur bei bestimmten Kupplungen und nur bei einer bestimmten Anordnung sämtlicher Teile des Antriebsstranges zueinander möglich. Sie ist insbesondere beschränkt auf eine parallel versetzte Anordnung der Kurbelwellen- und Getriebe-Eingangswellen-Drehachse unter Zwischenschaltung eines in jedem Fall erforderlichen Primärantriebes. Der Primärantrieb kann entweder zwischen Kurbelwelle und Kupplung oder zwischen Kupplung und Getriebeeingangswelle angeordnet sein. Häufig ist der Primärantrieb auch mit einer Übersetzung ausgeführt zur Reduzierung der Kurbelwellendrehzahl auf eine niedrigere Umdrehungszahl der Getriebeeingangswelle. Diese Anordnung findet man üblicherweise bei Fahrzeugen, deren motorischer Antrieb quer zur Fahrzeuglängsachse angeordnet ist.

Bei einem anderen gebräuchlichen Antriebsstrangkonzept stimmen die Antriebsdrehzahlen des motorischen Antriebs und der Getriebeeingangswelle überein, dh. eine Primärübersetzung ist hier nicht vorhanden. In diesem Fall fluchten beispielsweise die Mittellinien der Kurbelwelle, der Kupplung und der Getriebeeingangswelle, wodurch ein Primärantrieb überflüssig ist. Sie weisen keinen Parallelversatz zueinander auf, sondern sind in einer Linie hintereinander angeordnet, dh. auf der einen Seite der Kupplung ist der Motor und auf der anderen Seite das Getriebe angeordnet. Derartige Anordnungen von motorischem Antrieb, Kupplung und Getriebeeingangswelle hintereinander kommen insbesondere bei Fahrzeugen vor, bei denen die Kurbelwelle des motorischen Antriebes in Fahrzeuglängsrichtung ausgerichtet ist. Für derartige Antriebsstrangkonzepte eignen sich die vorstehend beschriebenen Anti-Hopping-Kupplungen nicht.

Deshalb ist es Aufgabe der vorliegenden Erfindung, eine konstruktiv einfache, auch nachrüstbare Lösung für eine drehmomenten-/drehzahldifferenzabhängige Kupplungsbetätigungseinheit für derart motorangetriebene Fahrzeuge vorzuschlagen, bei welchen der motorische Antrieb, die Kupplung und die Getriebeeingangswelle hintereinander (in Reihe) angeordnet sind, sodass deren Drehachsen miteinander fluchten.

Die Aufgabe löst die Erfindung durch Ausgestaltung der Kupplungsbetätigungseinheit mit den im Anspruch 1 angegebenen Merkmalen. Vorteilhafte Weiterbildungen sind Gegenstand der Unteransprüche.

Neben dem einfachen konstruktiven Aufbau und dem geringen Bauvolumen wird als besonderer Vorteil der erfindungsgemäßen Lösung angesehen, dass sie als vollständige Einheit vormontiert und auf einfache Weise gegen vorhandene Kupplungsbauteile ausgetauscht werden kann.

Die Erfindung wird nachfolgend anhand der in den Zeichnungen dargestellten Ausführungsbeispiele erläutert.
- Figur 1: zeigt eine erste Kupplungsbetätigungseinheit in einer Schnittdarstellung
- Figur 2: zeigt eine Explosionsdarstellung der ersten Kupplungsbetätigungseinheit
- Figur 3: zeigt eine Ansicht des motorseitigen Mitnehmers
- Figur 4: zeigt eine Ansicht des getriebeseitigen Mitnehmers
- Figur 5: zeigt eine zweite Kupplungsbetätigungseinheit in einer Schnittdarstellung
- Figur 6: zeigt eine Explosionsdarstellung der zweiten Kupplungsbetätigungseinheit

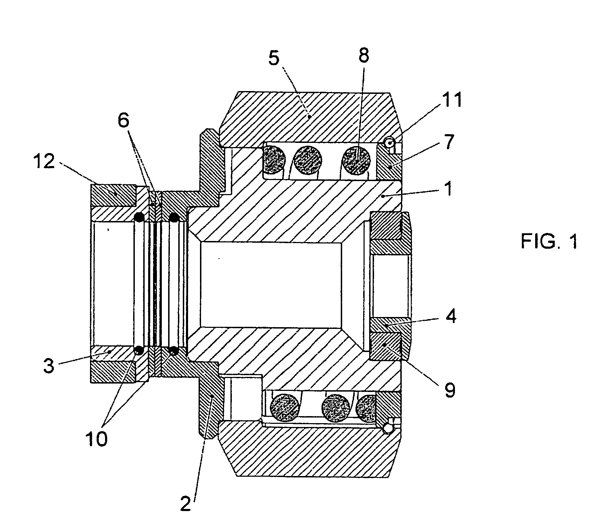

Das in Figur 1 gezeigte erste Ausführungsbeispiel einer erfindungsgemäßen Kupplungsbetätigungseinheit ist beispielsweise auf einer nicht dargestellten Getriebeeingangswelle angeordnet, die von der in der Figur 1 linken Seite in den getriebeseitigen Mitnehmer 1 der Kupplungsbetätigungseinheit hineinreicht. Die in der Figur 1 rechte Seite der Kupplungsbetätigungseinheit ist zum Motor hin gerichtet. Der getriebeseitige Mitnehmer 1 ist an seinem Innenumfang an die Ausgestaltung der Getriebeeingangswelle angepasst, beispielsweise durch eine entsprechende Keilnutverzahnung oder dergleichen, sodass er im eingebauten Zustand kraft- und formschlüssig in Umfangsrichtung, jedoch axial verschieblich mit der Getriebeeingangswelle verbunden ist. Außerdem weist die Kupplungsbetätigungseinheit einen motorseitigen Mitnehmer 2 auf Der Mitnehmer 2 ist durch einen rotationssymmetrischen Absatz axial gegen einen entsprechenden Absatz 21 an dem getriebeseitigen Ende des Mitnehmers 1 abgestützt. Nach dem Ausführungsbeispiel ist der Mitnehmer 2 mit einer Außenhülse 5 drehfest verbunden. Die Verbindung des Mitnehmers 2 mit der Außenhülse 5 kann kraft- und formschlüssig und/oder stoffschlüssig ausgeführt sein. Beispielsweise können in dem Mitnehmer 2 Bohrungen 17 vorgesehen sein, durch welche Stifte oder Schrauben hindurchgeführt sein können, um damit eine drehfeste Verbindung mit der Au-βenhülse 5 herzustellen. Die zweiteilige Ausgestaltung des motorseitigen Mitnehmers 2 und der Außenhülse 5 nach dem Ausführungsbeispiel hat lediglich herstellungstechnische, jedoch keine funktionalen Gründe. Der Mitnehmer 2 und die Außenhülse 5 können daher auch einstückig ausgebildet sein. Mit der Außenhülse 5 ist beispielsweise ein nicht dargestellter Kupplungsbelagträger drehfest verbunden. Zwischen dem Außenumfang des getriebeseitigen Mitnehmers 1 und dem Innenumfang der Außenhülse 5 ist eine Ringnut zur Aufnahme eines geeigneten Federelementes, beispielsweise einer Spiralfeder 8, einer Tellerfeder, einer Gummifeder oder dergleichen vorgesehen. Das Federelement ist in der Ringnut vorgespannt eingebaut und dazu mit einem Ende an einem Außenbund des getriebeseitigen Mitnehmers 1 abgestützt. An seinem anderen Ende ist das Federelement gegen ein Stützteil, zBsp. ein kreisringförmiges Federschloss 7 abgestützt, welches von einem Sicherungsring 11 am Innenumfang der Außenhülse 5 axial gesichert ist.

An der dem Motor zugewandten Seite des Mitnehmers 1 ist ein Axialkugellager 9 gelagert, dessen von dem Mitnehmer 1 abgewandte Außenlagerschale als Anlagefläche für eine Kupplungsfeder, ein kupplungsfedertragendes Bauteil, ein Kupplungsausrücklager oder dergleichen ausgebildet ist. Wie im Ausführungsbeispiel dargestellt, kann dazu auf der Außenlagerschale auch ein separates Bauteil in Gestalt eines Federdrückers 4 vorgesehen sein.

An der dem Getriebe zugewandten Seite der Kupplungsbetätigungseinheit ist eine axiale Abstützung der Stirnfläche des motorseitigen Mitnehmers 2 vorgesehen gegenüber dem (nicht dargestellten) Lagerinnenring der Getriebeeingangswelle. Dazu ist ein kreisringförmiger Lageranschlag 3 derart ausgebildet, dass er innenumfänglich drehbar auf der Getriebeeingangswelle in Kontakt zum Lagerinnenring der Getriebeeingangswelle angeordnet werden kann. Auf dem Außenumfang des Lageranschlags 3 ist ein Radial-Wellendichtring 12 angeordnet, der bedarfsweise zur Abdichtung zwischen dem Getriebegehäuse und der Getriebeeingangswelle dient. Ebenfalls zu diesem Zweck dient bedarfsweise eine weitere Dichtungseinrichtung am Innenumfang des Lageranschlags 3, beispielsweise ein O-Ring 10 oder dergleichen, der in einer entsprechenden Ringnut des Lageranschlags 3 vorgesehen ist. Außerdem kann auch am Innenumfang des motorseitigen Mitnehmers 2 in einer Umfangsnut bedarfsweise ein weiterer O-Ring 10 angeordnet sein. Die Abdichtung der Getriebeeingangswelle gegenüber dem Getriebegehäuse in Baueinheit mit dem Lageranschlag 3 stellt lediglich eine vorteilhafte Ausgestaltung dar. Für die Funktion der Kupplungsbetätigungseinheit ist die Getriebeabdichtung nicht erforderlich. Deshalb kann die Getriebeabdichtung auch durch andere konstruktive Maßnahmen, zBsp. eine abgedichtete Lagereinheit, ausgeführt sein, solange eine axiale, getriebeeingangsseitige Abstützung der Kupplungsbetätigungseinheit sichergestellt ist.

Stirnseitig zwischen dem Lageranschlag 3 und dem Mitnehmer 2 ist bzw. sind ein oder mehrere Anlaufscheiben 6 vorgesehen. Sie dienen zur Entkoppelung der Drehung zwischen dem Mitnehmer 2 und dem Lageranschlag 3. Gleichzeitig kann durch die Anlaufscheibe/n eine exakte Lageeinstellung der Kupplungsbetätigungseinheit in Axialrichtung auf der Getriebeeingangswelle erreicht werden.

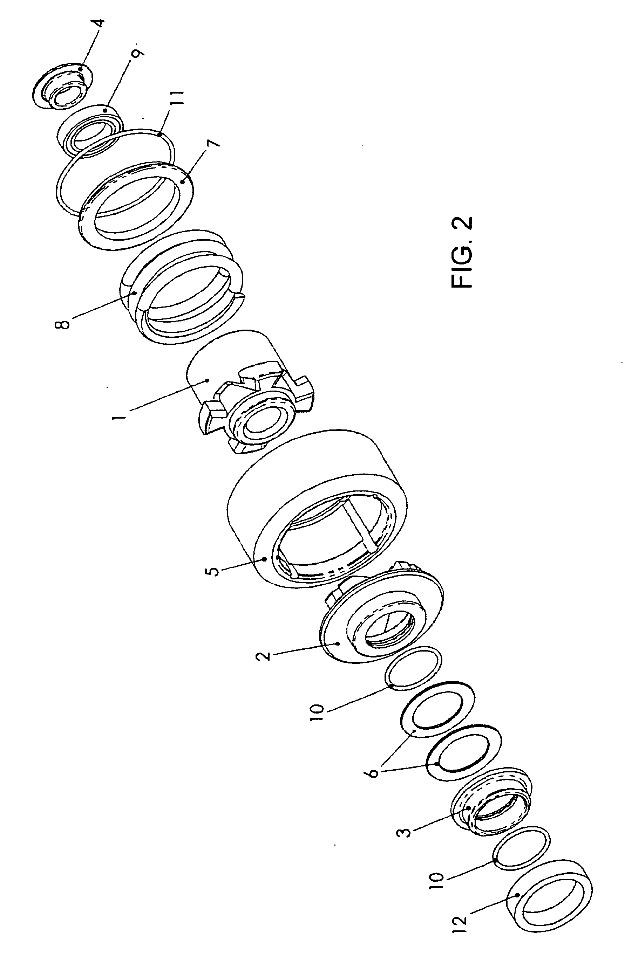

Aus der Explosionsdarstellung der erfindungsgemäßen Kupplungsbetätigungseinheit in Figur 2 ist die Reihenfolge der Bauteile beim Zusammenbau sowie deren Anordnung auf der nicht dargestellten Getriebeeingangswelle ersichtlich. Daraus ergibt sich auch, dass die gesamte Kupplungsbetätigungseinheit vormontiert werden kann. In besonders vorteilhafter Weise kann dabei an der Außenhülse 5 bereits ein Kupplungsbelagträger befestigt werden. In diesem Fall ist die Nachrüstung eines Fahrzeuges mit einer erfindungsgemäßen Kupplungsbetätigungseinheit besonders einfach, weil lediglich der vorhandene Kupplungsbelagträger ersetzt werden muss. Bauliche Änderungen am Getriebe oder an der Kupplung sind in der Regel nicht erforderlich.

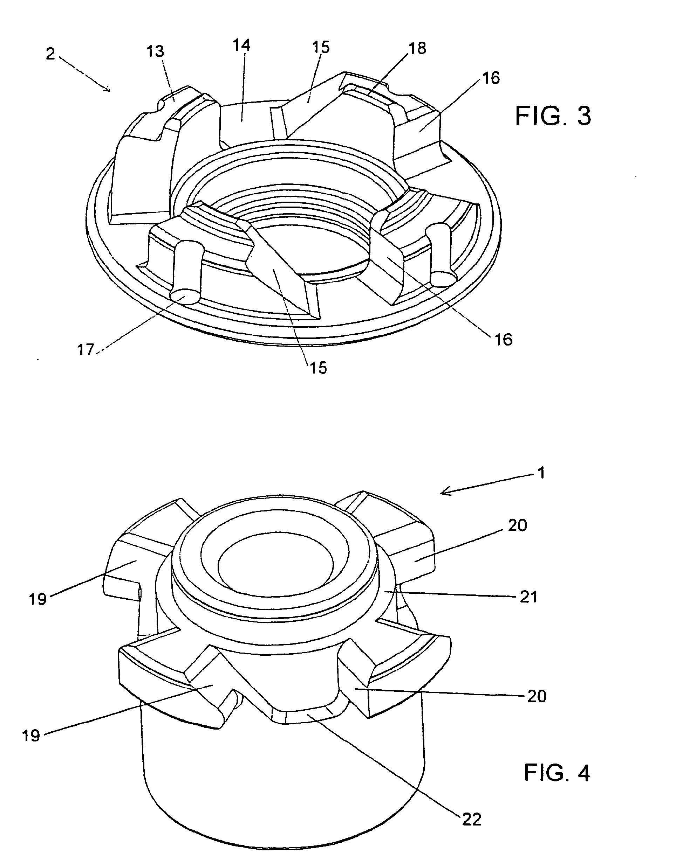

Die Figuren 3 und 4 zeigen Ansichten der beiden Mitnehmer 1 und 2 aus denen sich deren Zusammenwirken erklärt. An dem motorseitigen Mitnehmer 2 sind segmentartige Vorsprünge 13 und Ausnehmungen 14, vorzugsweise jeweils vier Stück, kreisringförmig angeordnet. Die Vorsprünge 13 greifen im eingebauten Zustand in entsprechende Ausnehmungen des getriebeseitigen Mitnehmers 1, ähnlich einer Stirnverzahnung, wie dies in Fig. 1 dargestellt ist. An dem in Umfangrichtung einen Ende jedes Vorsprungs 13 des Mitnehmers 2 ist eine Rampe 15 ausgebildet, am anderen Ende jeweils eine sich radial und axial erstreckende Anlagefläche 16. Die Rampen 15 und die Anlageflächen 16 können kopf- und bodenseitig mit einem Radius versehen sein wie in Fig 3 dargestellt. Entsprechende Gegenrampen 19 und Gegenanlageflächen 20 sind an einem Bund des getriebeseitigen Mitnehmers 1 ausgebildet, siehe Fig 4. Die Rampen 15 und die Gegenrampen 19 sowie die Anlage- und Gegenanlageflächen 16, 20 bewirken, dass ein Antriebsdrehmoment über die stirnverzahnungsähnliche Verbindung nur in einer Drehrichtung übertragen werden kann, nämlich wenn die im Wesentlichen axialen Anlageflächen 16, 20 beider Mitnehmer 1, 2 aneinander anliegen. Das ist der Fall, wenn von dem motorischen Antrieb über die geschlossene Kupplung ein Drehmoment auf die Getriebeeingangswelle übertragen wird. Im Schubbetrieb oder beim Herunterschalten, sobald die Drehzahl der Getriebeeingangswelle größer wird als die Antriebsdrehzahl lösen sich die beiden im wesentlichen axialen Anlageflächen 16, 20 voneinander und stattdessen gelangen die Rampen 15, 19 in gegenseitigen Kontakt. Bei weiterer Relativdrehung der beiden Mitnehmer 1, 2 gleiten die Rampen 15, 19 aufeinander. Da der motorseitige Mitnehmer 2 in Axialrichtung am Getriebe abgestützt ist, erfährt der getriebeseitige Mitnehmer 1 durch die Relativdrehung eine Axialbewegung gegen die Kraft des Federelements 8 in Richtung auf die Motorseite. Im Verlauf dieser Axialbewegung gelangt das in axialer Richtung wirkende Lager 9 bzw. der Federdrücker 4 in Berührung mit der Kupplungsfeder, dem kupplungsfedertragenden Bauteil, dem Kupplungsausrücklager oder dergleichen, wodurch die Kupplung zu schleifen beginnt bzw. öffnet und den Kraftfluss unterbricht.

Auf den Vorsprüngen 13 des motorseitigen Mitnehmers 2 können kreisringförmige Führungsstege 18 ausgebildet sein. In diesem Fall sind an dem getriebeseitigen Mitnehmer 2 entsprechende Führungsnuten 22 vorgesehen, in welche die Führungsstege 18 eingreifen, wenn die Kupplungsbetätigungseinheit inaktiv ist.

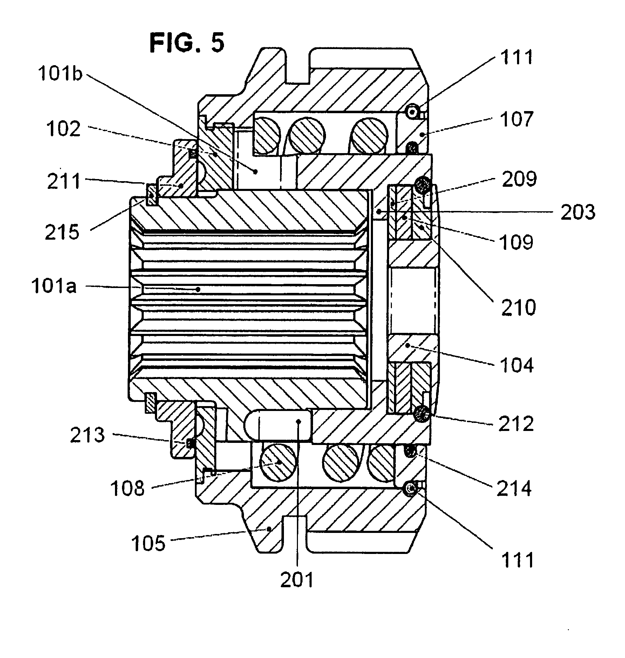

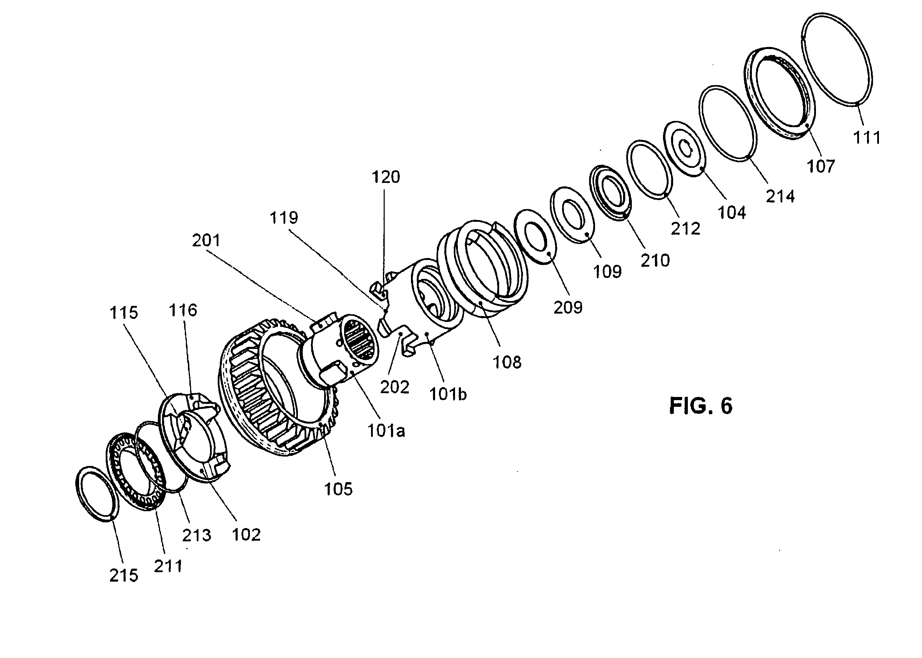

In den Figuren 5 und 6 ist ein zweites Ausführungsbeispiel einer erfindungsgemäßen Kupplungsbetätigungseinheit dargestellt. Dessen Funktionsweise stimmt mit derjenigen des vorstehend ausführlich beschriebenen ersten Ausführungsbeispiels grundsätzlich überein. Insbesondere leitet diese Kupplungsbetätigungseinheit ein vom Antriebsmotor erzeugtes und bei geschlossener Kupplung über den Kupplungsbelagträger übertragenes Drehmoment direkt an die Getriebeeingangswelle weiter. Befindet sich der Antriebsmotor hingegen im Motorbremsbetrieb und überwiegt währenddessen das an der Getriebeeingangswelle von dem Hinterrad bzw. den Hinterrädern erzeugte Drehmoment, öffnet die Kupplungsbetätigungseinheit die Kupplung selbsttätig und unterbricht damit den Kraftfluss zwischen Motor und Getriebe.

Von dem ersten Ausführungsbeispiel unterscheidet sich das zweite Ausführungsbeispiel durch eine konstruktiv anders ausgeführte Lagesicherung der Kupplungsbetätigungseinheit auf der Getriebeeingangswelle mittels einer Wellenhülse 101a eines zweiteiligen getriebeseitigen Mitnehmers 101. Die Wellenhülse 101a verfügt über eine Innenverzahnung, die an die Außenverzahnung der Getriebeeingangswelle auch in deren Längserstreckung angepasst ist. Insbesondere erstreckt sich die innenverzahnte Wellenhülse 101a vom getriebeseitigen Auslaufende der Außenverzahnung der Getriebeeingangswelle, das sich regelmäßig in ausreichendem Abstand vor dem Wellendichtring des Getriebegehäuses befindet, bis in etwa zum motorseitigen Ende der Getriebeeingangswelle. Die axiale Verschiebbarkeit der Wellenhülse 101a in Richtung des Getriebes ist damit durch die sich berührenden Auslaufenden der Wellen- bzw. Hülsenverzahnung begrenzt. Zusätzlich oder alternativ kann eine nicht dargestellte axiale Stützscheibe in die Wellenhülse 101a integriert sein, mit der eine Axialverschiebung der Wellenhülse 101 a auf der Getriebeeingangswelle in Richtung des Getriebegehäuses begrenzt ist. Zu diesem Zweck ist auch die Verwendung eines Innenseegerings möglich. In vorteilhafter Weise ist dadurch in jedem Fall eine einfache Abstützung der gesamten Kupplungsbetätigungseinheit mittels der Wellenhülse 101a auf der Getriebeeingangswelle erreicht, die den beim ersten Ausführungsbeispiel erforderlichen Lageranschlag 3 ersetzt.

Am Außenumfang der Wellenhülse 101a sind gleichmäßig verteilt, vorzugsweise drei radial nach außen gerichtete, drehmomentübertragende Vorsprünge 201 angeordnet. Diese Vorsprünge 201 greifen jeweils in entsprechende Ausnehmungen 202 einer Innenhülse 101b ein, die das zweite Teil des getriebeseitigen Mitnehmers 101 bildet. Die gegenseitigen Berührungsflächen der Vorsprünge 201 und der Ausnehmungen 202 der Innenhülse 101b sind vorzugsweise mit einer reibungsvermindernden Beschichtung oder mit Führungsrillen zur Aufnahme von Lagerkugeln versehen, womit das Losbrechmoment der Kupplungsbetätigungseinheit in an sich bekannter Weise verringert werden kann.

Wie in Fig 5 dargestellt, ist die Innenhülse 101b axial verschieblich und drehbar auf einem Teil des Außenumfangs der Wellenhülse 101a angeordnet. In dem motorseitigen Ende der Innenhülse 101b ist ein Federdrücker 104, der direkt auf die nicht dargestellte Kupplungsdruckfeder einwirkt, mittels einer Axiallagereinheit gelagert, bestehend aus einem Lageranschlag 210, einem Axial-Lager 109 und einer Anlaufscheibe 209. Der Federdrücker 104 ist mit dem Lageranschlag 210 durch eine Presspassung verbunden. Die Axiallagereinheit ist in der Innenhülse 101b zwischen einem umlaufenden Innensteg 203 der Innenhülse 101b und einem O-Ring 212 axial fixiert. Der O-Ring 212 ist in seinem Einbauzustand in einer entsprechenden halbkreisförmigen Ausnehmung nahe dem motorseitigen Ende der Innenhülse 101b und durch eine viertelkreisförmige Ausnehmung am Außenumfang des Lageranschlags 210 gehalten. Damit ist der Querschnitt des O-Rings 212 auf dreiviertel seines Umfangs von der Innenhülse 101b und dem Lageranschlag 210 umgeben.

Der zweiteilig ausgebildete getriebeseitige Mitnehmer 101 erleichtert die zur Kupplungsbetätigung erforderliche Axialbewegung erheblich, weil die mit der Getriebeeingangswelle über eine Wellenverzahnung formschlüssig verbundene Wellenhülse 101a in ihrer relativen Lage zur Getriebeeingangswelle verbleibt und die kupplungsöffnende Axialbewegung bei einem ausreichenden Drehzahl- bzw. Drehmomentunterschied- allein von der gesamten Innenhülse 101b vollzogen wird.

An ihrem getriebeseitigen Ende weist die Wellenhülse 101a vorzugsweise drei weitere Ausnehmungen mit Gegenrampen 119 und Gegenanlageflächen 120 auf, die mit Rampen 115 und Anlageflächen 116 eines motorseitigen Mitnehmers 102 in der vorstehend beschriebenen Weise zusammenwirken. Dabei können zwischen den Rampen 115 und Gegenrampen 119 reibungsvermindernde Beschichtungen oder Führungsrillen zur Aufnahme von Lagerkugeln angeordnet sein, welche das Losbrechmoment der Kupplungsbetätigungseinheit in an sich bekannter Weise verringern.

Der motorseitige Mitnehmer 102 ist mit einer außenverzahnten Außenhülse 105 zu einer Einheit verbunden, vorzugsweise sind beide Bauteile miteinander verstiftet und/oder verschweißt. In die Außenverzahnung der Außenhülse 105 greift ein entsprechend innenverzahnter Kupplungsbelagträger in jeder Drehrichtung kraftschlüssig und in der Verzahnung axialverschieblich ein. Da ein solcher Kupplungsbelagträger, insbesondere bei Einscheibentrockenkupplungen, hinlänglich bekannt ist, wird auf eine Darstellung und Beschreibung an dieser Stelle verzichtet. Die drehbare Lagerung des motorseitigen Mitnehmers 102 ist auf dem Au-βenumfang der Wellenhülse 101a vorgesehen und zwar nahe von deren getriebeseitigem Ende, wie in Fig 5 dargestellt. Dort ist der motorseitige Mitnehmer 102 durch ein kreisringförmiges Anlauflager 211 gegen eine axiale Bewegung in Getrieberichtung abgestützt. Das Anlauflager seinerseits ist durch einen Seegerring 215 gehalten, der in eine entsprechende Nut der Wellenhülse 101a eingesetzt ist.

Die zwischen den sechs Ausnehmungen der Innenhülse 101b verbleibenden Stege sind radial nach außen gekröpft, wie in Fig 6 dargestellt. Gegen die Abkröpfungen der Innenhülse 101b wirkt eine vorgespannte Spiralfeder 108, die sich mit ihrem anderen Ende gegen einen Federverschluss 107 stützt, der innen am motorseitigen Ende der Außenhülse 105 durch einen Sicherungsring 111 gehalten ist. Dadurch ist gewährleistet, dass die axialverschiebliche Innenhülse 101b in ihre Ausgangsstellung zurückkehrt, sobald die Drehmoment- bzw. Drehzahldifferenz zwischen dem Antriebsmotor und der Getriebeeingangswelle ein Minimum erreicht. Durch geeignete Dimensionierung der Spiralfeder 108 lässt sich das Ansprechverhalten der Kupplungsbetätigungseinheit ebenso bestimmen wie durch die Wahl des Steigungswinkels der Rampen- 115 bzw. Gegenrampen 119.

Um das Eindringen von Schmutz, Kupplungsabrieb, etc. zu verhindern, der die Dreh- und Axialbewegung der Innenhülse 101b behindern könnte, ist der Federverschluss 107 gegenüber der Innenhülse 101b durch einen O-Ring 214 abgedichtet. Aus demselben Grund kann zwischen dem getriebeseitigen Mitnehmer 102 und dem Anlauflager 211 ebenfalls ein O-Ring 213 angeordnet sein. Dieser ist insbesondere dann von Vorteil, wenn zwischen dem getriebeseitigen Mitnehmer 102 und dem Anlauflager 211 ein kugel- oder nadelbestücktes Axiallager vorgesehen ist.

Die vorstehend beschriebene Kupplungsbetätigungseinheit eignet sich besonders zur Verwendung bei Fahrzeugen mit einer Einscheiben-Trockenkupplung und einer Kupplungsdruckfeder, die als Tellerfeder ausgebildet ist, wobei die Tellerfeder vorzugsweise von einer Kupplungsdruckstange betätigbar ist, welche durch eine hohlgebohrte Getriebeeingangswelle geführt ist. Dabei ist die erfindungsgemäße Kupplungsbetätigungseinheit zentral mit dem Kupplungsbelagträger verbunden.

### Bezugszeichenliste:

| Ausführungsbeispiel Fig 1 bis 4 | | | Ausführungsbeispiel Fig 5 bis 6 | |
|---|---|---|---|---|
| 1 | Mitnehmer Getriebeseite | | 101 | Mitnehmer Getriebeseite |
| 2 | Mitnehmer Motorseite | | 101a | Wellenhülse |
| 3 | Lageranschlag | | 101b | Innenhülse |
| 4 | Federdrücker | | 102 | Mitnehmer Motorseite |
| 5 | Außenhülse | | 104 | Federdrücker |
| 6 | Anlaufscheibe | | 105 | Außenhülse |
| 7 | Federverschluss | | 107 | Federverschluss |
| 8 | Spiralfeder | | 108 | Spiralfeder |
| 9 | Lager | | 109 | Axial-Lager |
| 10 | O-Ring | | 111 | Sicherungsring |
| 11 | Sicherungsring | | 115 | Rampe |
| 12 | Radial-Wellendichtring | | 116 | Anlagefläche |
| 13 | Vorsprung | | 119 | Gegenrampe |
| 14 | Ausnehmung | | 120 | Gegenanlagefläche |
| 15 | Rampe | | 201 | Vorsprung |
| 16 | Anlagefläche | | 202 | Ausnehmung |
| 17 | Bohrung | | 203 | Innensteg |
| 18 | Führungssteg | | 209 | Anlaufscheibe |
| 19 | Gegenrampe | | 210 | Lageranschlag |
| 20 | Gegenanlagefläche | | 211 | Anlauflager |
| 21 | Bund/Absatz | | 212 | O-Ring |
| 22 | Führungsnut | | 213 | O-Ring |
| | | | 214 | O-Ring |
| | | | 215 | Seegerring |

## Patentansprüche

1. Kupplungsbetätigungseinheit für motorangetriebene Fahrzeuge, deren Kupplung sowohl willkürlich als auch abhängig von einer an der Kupplung auftretenden Drehmomenten-/Drehzahldifferenz betätigbar ist, bestehend aus einem getriebeseitigen (1, 101) und einem motorseitigen (2, 5) Mitnehmer, wobei an den Mitnehmern in gegenseitigem Eingriff stehende Rampen (15, 115) bzw. Gegenrampen (19, 119) und Anlageflächen (16, 116) ausgebildet sind, die bei einer Drehung der Mitnehmer in einer Drehrichtung über die Anlageflächen (16, 116) ein Antriebsdrehmoment übertragen und die bei einer Drehung der Mitnehmer in entgegengesetzter Drehrichtung die Drehbewegung mittels der Rampen (115, 15) bzw. Gegenrampen (19, 119) in eine axiale Bewegung eines Mitnehmers umsetzen, die das Öffnen der Kupplung bewirkt,
**dadurch gekennzeichnet,**
**dass** der motorseitige Mitnehmer (2, 5) mitsamt seiner Außenhülse (102, 105) gegenüber einer Getriebeeingangswelle koaxial und drehbar angeordnet ist,
**dass** der motorseitige Mitnehmer (2, 5) mitsamt seiner Außenhülse (102, 105) in axialer Richtung verschieblich gegenüber der Getriebeeingangswelle angeordnet ist, wobei dessen Verschieblichkeit in Richtung auf das Getriebegehäuse durch einen Anschlag (3,211) begrenzt ist, und
**dass** der getriebeseitige Mitnehmer (1, 101) koaxial zur und in Umfangsrichtung kraft- und/oder formschlüssig, jedoch axial verschieblich auf der außenverzahnten Getriebeeingangswelle angeordnet ist, wobei dessen Verschieblichkeit in Richtung auf das Getriebegehäuse durch den motorseitigen Mitnehmer (2, 102) und/oder durch einen Anschlag begrenzt ist.

2. Kupplungsbetätigungseinheit nach Anspruch 1,
**dadurch gekennzeichnet,**
**dass** zumindest ein Teil des motorseitigen Mitnehmers (2, 5) mitsamt seiner Außenhülse (102, 105) den getriebeseitigen Mitnehmer (1, 101) an seinem Au-βenumfang umgibt,
**dass** zumindest ein Teil der motorzugewandten Stirnseite des getriebeseitigen Mitnehmers (1, 101) als Kontaktfläche mit einer Kupplungsfeder, einem kupplungsfedertragenden Bauteil, einer Kupplungsdruckplatte oder einem Kupplungsausrücklager ausgebildet ist.

3. Kupplungsbetätigungseinheit nach Anspruch 1 oder 2,
**dadurch gekennzeichnet;**
**dass** der motorseitige Mitnehmer (2, 102) aus zwei miteinander kraft- und formschlüssig und/oder stoffschlüssig, drehfest verbundenen Bauteilen (2, 5; 102, 105) ausgebildet ist, wobei die Rampen (15, 115) und die Anlageflächen (16, 116) an dem Mitnehmer (2, 102) ausgebildet sind und das zweite Bauteil als Außenhülse (5, 105) ausgebildet ist, welche den getriebeseitigen Mitnehmer (1, 101) außenumfänglich umgibt.

4. Kupplungsbetätigungseinheit nach einem der vorhergehenden Ansprüche,
d**adurch gekennzeichnet,**
zwischen den Rampen (15, 115) und den Gegenrampen (19, 119) jeweils eine Kugel angeordnet ist, die in Nuten der Rampen (15, 115) und Gegenrampen (19, 119) zwangsgeführt ist.

5. Kupplungsbetätigungseinheit nach einem der vorhergehenden Ansprüche,
**dadurch gekennzeichnet,**
**dass** der motorseitige Mitnehmer (2, 102) und die Außenhülse (5, 105) als einstückiges Bauteil ausgebildet sind.

6. Kupplungsbetätigungseinheit nach einem der vorhergehenden Ansprüche,
**dadurch gekennzeichnet,**
**dass** für die Abstützung des motorseitigen Mitnehmers (2) gegen das Getriebegehäuse ein Lageranschlag (3) vorgesehen ist, der drehbar auf der Getriebeeingangswelle angeordnet ist und mit dem Lagerinnenring eines Lagers der Getriebeeingangswelle in Berührungskontakt steht.

7. Kupplungsbetätigungseinheit nach Anspruch 6,
**dadurch gekennzeichnet,**
**dass** auf der Außenumfangsfläche des Lageranschlags (3) ein Radial-Wellendichtungsring (12) angeordnet ist, der das Getriebegehäuse gegenüber dem Kupplungsgehäuse abdichtet.

8. Kupplungsbetätigungseinheit nach Anspruch 6 oder 7,
**dadurch gekennzeichnet,**
**dass** auf der Innenumfangsfläche des Lageranschlags (3) eine Radialdichtung, zBsp. ein O-Ring (10) angeordnet ist, der das Getriebegehäuse gegenüber dem Kupplungsgehäuse abdichtet.

9. Kupplungsbetätigungseinheit nach einem der vorhergehenden Ansprüche,
**dadurch gekennzeichnet,**
**dass** auf der Getriebeeingangswelle zwischen dem motorseitigen Mitnehmer (2) und dem Lageranschlag (3) ein oder mehrere Anlaufscheiben (6) angeordnet sind.

10. Kupplungsbetätigungseinheit nach einem der vorhergehenden Ansprüche,
**dadurch gekennzeichnet,**
**dass** der getriebeseitige Mitnehmer (1) gegen den motorseitigen Mitnehmer (2) durch ein elastisches Element, beispielsweise eine Spiralfeder (8), in axialer Richtung vorgespannt ist.

11. Kupplungsbetätigungseinheit nach einem der vorhergehenden Ansprüche,
**dadurch gekennzeichnet,**
**dass** der motorseitige Mitnehmer (2, 102) oder dessen Außenhülse (5, 105) mit einem Kupplungsbelagträger drehfest verbunden ist.

12. Kupplungsbetätigungseinheit nach Anspruch 11,
**dadurch gekennzeichnet,**
**dass** die drehfeste Verbindung durch eine Verzahnung des motorseitigen Mitnehmers (2, 102) oder dessen Außenhülse (5, 105) und des Kupplungsbelagträger ausgebildet ist.

13. Kupplungsbetätigungseinheit nach einem der vorhergehenden Ansprüche,
**dadurch gekennzeichnet,**
**dass** als Kontaktfläche des getriebeseitigen Mitnehmers (1, 101) mit der Kupplungsfeder, dem kupplungsfedertragenden Bauteil, der Kupplungsdruckplatte oder dem Kupplungsausrücklager ein Federdrücker (4, 104) als separates Bauteil vorgesehen ist.

14. Kupplungsbetätigungseinheit nach Anspruch 13,
**dadurch gekennzeichnet,**
**dass** zwischen dem getriebeseitigen Mitnehmer (1, 101) und dem Federdrücker (4, 104) ein Lager (9, 109) angeordnet ist.

15. Kupplungsbetätigungseinheit nach einem der vorhergehenden Ansprüche,
**dadurch gekennzeichnet,**
**dass** der getriebeseitige Mitnehmer (101) zweiteilig ausgebildet ist, bestehend aus einer direkt auf der Getriebeeingangswelle angeordneten, innenverzahnten Wellenhülse (101a) und einer Innenhülse (101b), welche drehbar und axialverschieblich außen auf der Wellenhülse (101b) angeordnet ist.

16. Kupplungsbetätigungseinheit nach einem der vorhergehenden Ansprüche,
**dadurch gekennzeichnet,**
**dass** die Innenverzahnung der Wellenhülse (101a) an die Länge der Außenverzahnung der Getriebeeingangswelle angepasst ist, so dass eine Abstützung der Wellenhülse (101a) durch gegenseitige Anlage der Auslaufenden beider Verzahnungen dann erfolgt, wenn das motorseitige Ende der Wellenhülse (101a) in etwa mit dem motorseitigen Ende der Getriebeeingangswelle fluchtet.

17. Kupplungsbetätigungseinheit nach Anspruch 15,
**dadurch gekennzeichnet,**
**dass** der Federdrücker (104) mitsamt seiner Lagereinheit (Anlaufscheibe 209, Axial-Lager 109 und Lageranschlag 210) in der Innenhülse (101b) angeordnet ist.

18. Kupplungsbetätigungseinheit nach einem der vorhergehenden Ansprüche,
**dadurch gekennzeichnet,**
**dass** zwischen der Innenhülse (101b) und einer die Innenhülse (101b) umfassenden Außenhülse (105) eine Spiralfeder (108) vorgespannt angeordnet ist.

19. Kupplungsbetätigungseinheit nach Anspruch 15,
**dadurch gekennzeichnet,**
die Rampen (115) des motorseitigen Mitnehmers (102) und die damit zusammenwirkenden Gegenrampen (119) der Innenhülse (101b) eine reibungsmindemde Oberflächenbeschichtung aufweisen oder Nuten, in denen jeweils eine Lagerkugel angeordnet ist.

20. Kupplungsbetätigungseinheit nach einem der Ansprüche 15 bis 19,
**dadurch gekennzeichnet,**
**dass** die Anlageflächen (116) des motorseitigen Mitnehmers (102) und die damit zusammenwirkenden Gegenanlageflächen (120) der Innenhülse (101b) eine reibungsmindernde Oberflächenbeschichtung aufweisen oder Nuten, in denen jeweils eine Lagerkugel angeordnet ist.

## Claims

1. Clutch operating unit for engine-driven vehicles, the clutch of which can be operated arbitrarily as well as depending on a torque/speed difference occurring at the clutch, comprising an actuator (1, 101; 2, 5) on the gear box side and on the engine side, wherein chutes (15, 115) and counter chutes (19, 119) and contact surfaces (16, 116) which engage with each other are formed at the actuators, the chutes, counter chutes and contact surfaces transmitting a drive torque when the actuators are rotated in a rotating direction over the contact surfaces (16, 116) and, when the actuators are rotated in reverse rotating direction, converting the rotating movement into an axial movement of an actuator by means of the chutes (115, 15) and counter chutes (19, 119), the axial movement effecting the releasing of the clutch,
**characterized in that**
the actuator (2, 5) on the engine side along with its outer bushing (102, 105) is arranged coaxially and rotatably relative to a gear box input shaft,
the actuator (2, 5) on the engine side along with its outer bushing (102, 105) is arranged slidably in axial direction relative to the gear box input shaft, wherein its slidability in the direction of the gear box housing is limited by a stop (3, 211), and
the actuator (1, 101) on the gear box side is arranged coaxially relative to and in circumferential direction force- and/or form-fittedly, but axially slidably on the gear box input shaft having outer teething, wherein the actuator's slidability in the direction towards the gear box housing is limited by the actuator (2, 102) on the engine side and/or a stop.

2. The clutch operating unit according to claim 1,
**characterized in that**
at least a part of the actuator (2, 5) on the engine side along with its outer bushing (102, 105) encloses the actuator (1, 101) on the gear box side at its outer circumference,
that at least a part of the front surface facing the engine of the actuator (1, 101) on the gear box side is formed as contact surface with a clutch spring, a clutch spring carrying element, a clutch pressure plate or a clutch release bearing.

3. The clutch operating unit according to claim 1 or 2,
**characterized in that**
the actuator (2, 102) on the engine side is formed by two elements (2, 5; 102, 105) being connected to each other rotatably fix in a force- and form-fit manner and/or by material, wherein the chutes (15, 115) and the contact surfaces (16, 116) are formed at the actuator (2, 102) and the second element is formed as outer bushing (5, 105) enclosing the actuator (1, 101) at its outer circumference.

4. The clutch operating unit according to any one of the preceding claims,
**characterized in that**
one ball at a time is arranged between the chutes (15, 115) and the counter chutes (19, 119), the balls being force guided in grooves of the chutes (15, 115) and the counter chutes (19, 119).

5. The clutch operating unit according to any one of the preceding claims,
**characterized in that**
the actuator (2, 102) on the engine side and the outer bushing (5, 105) are integrally formed.

6. The clutch operating unit according to any one of the preceding claims,
**characterized in that**
a bearing stop (3) is provided for supporting the actuator (2) on the engine side against the gear box housing, the bearing stop being rotatably arranged on the gear box input shaft and being in direct contact with the bearing inner ring of the bearing of the gear box input shaft.

7. The clutch operating unit according to claim 6,
**characterized in that**
a radial shaft sealing ring (12) is arranged on the outer circumference of the bearing stop (3), said radial shaft sealing ring (12) sealing the gear box housing against the clutch housing.

8. The clutch operating unit according to claim 6 or 7,
**characterized in that**
a radial sealing, e.g., an O-ring (10) is arranged at the inner circumferential surface of the bearing stop (3), the radial sealing sealing the gear box housing against the clutch housing.

9. The clutch operating unit according to any one of the preceding claims,
**characterized in that**
one or more starter disks (6) are arranged on the gear box input shaft between the actuator (2) of the engine side and the bearing stop (3).

10. The clutch operating unit according to any one of the preceding claims,
**characterized in that**
the actuator (1) on the gear box side is biased in axial direction against the actuator (2) on the engine side by an elastic element, e.g. a spiral spring (8).

11. The clutch operating unit according to any one of the preceding claims,
**characterized in that**
the actuator (2, 102) on the engine side or its outer bushing (5, 105) is connected in a rotatably fix manner to a clutch lining carrier.

12. The clutch operating unit according to claim 11,
**characterized in that**
the rotatably fix connection is formed by a teething of the actuator (2, 102) on the engine side or its outer bushing (5, 105) and the clutch lining carrier.

13. The clutch operating unit according to any one of the preceding claims,
**characterized in that**
a spring pusher (4, 104) as separate element is provided as contact surface of the actuator (1, 101) on the gear box side with the clutch spring, the clutch spring carrying element, the clutch pressure plate or the clutch releasing bearing.

14. The clutch operating unit according to claim 13
**characterized in that**
a bearing (9, 109) is arranged between the actuator (1, 101) on the gear box side and the spring pusher (4, 104).

15. The clutch operating unit according to any one of the preceding claims,
**characterized in that**
the actuator (101) on the gear box side is formed in two parts, comprising a shaft bushing (101a) having inner teething and being directly arranged on the gear box input shaft and an inner bushing (101b) which is arranged rotatably and axially slidably at the outside of the shaft bushing (101 b).

16. The clutch operating unit according to any one of the preceding claims,
**characterized in that**
inner teething of the shaft bushing (101 a) is adapted to the length of the outer teething of the gear box input shaft, so that the support of the shaft bushing (101a) is achieved by mutually contacting the ends of the two teethings when the end on the engine side of the shaft bushing (101a) is approximately in line with the end on the engine side of the gear box input shaft.

17. The clutch operating unit according to claim 15,
**characterized in that**
the spring pusher (104) along with its entire bearing unit (starter disk 209, axial bearing 109 and bearing stop 210) is arranged in the inner bushing (101b).

18. The clutch operating unit according to any one of the preceding claims,
**characterized in that**
a spiral spring (108) is arranged biasedly between the inner bushing (101b) and the outer bushing (105) enclosing the inner bushing (101b).

19. The clutch operating unit according to claim 15,
**characterized in that**
the chutes (115) of the actuator (102) on the engine side and the counter chutes (119) of the inner bushing (101 b) comprise a friction-reducing surface coating or grooves in each of which a bearing ball is arranged.

20. The clutch operating unit according to any one of claims 15 to 19,
**characterized in that**
the contact surfaces (116) of the actuator (102) on the engine side and the counter contact surfaces (120) of the inner bushing (101b) co-operating therewith comprise a friction-reducing surface coating or grooves in each of which a bearing ball is arranged.

## Revendications

1. Unité d'actionnement d'embrayage pour des véhicules à moteur, dont l'embrayage peut être actionné non seulement volontairement mais aussi en fonction d'une différence couple/vitesse de rotation survenant au niveau de l'embrayage, composée d'un entraîneur (1, 101) côté boîte de vitesses et d'un entraîneur (2, 5) côté moteur, sachant que des rampes (15, 115) ou des rampes antagonistes (19, 119) et des surfaces d'appui (16, 116) se trouvant en engagement mutuel sont réalisées sur les entraîneurs, lesquelles transmettent un couple d'entraînement lors d'une rotation des entraîneurs dans un sens de rotation par les surfaces d'appui (16, 116) et convertissent lors d'une rotation des entraîneurs dans le sens de rotation opposé le mouvement de rotation à l'aide des rampes (115, 15) ou rampes antagonistes (19, 119) en un mouvement axial d'un entraîneur qui provoque l'ouverture de l'embrayage, **caractérisée en ce que** l'entraîneur côté moteur (2, 5) avec sa douille extérieure (102, 105) est disposé de manière coaxiale et rotative par rapport à un arbre d'entrée de boîte de vitesses, **en ce que** l'entraîneur (2, 5) côté moteur avec sa douille extérieure (102, 105) est disposé de manière mobile dans le sens axial par rapport à l'arbre d'entrée de boîte de vitesses, sachant que sa mobilité en direction du carter de boîte de vitesses est limitée par une butée (3, 211), et **en ce que** l'entraîneur (1, 101) côté boîte de vitesses est disposé de manière coaxiale et dans une direction périphérique par force et/ou coopération de forme, toutefois mobile dans le sens axial sur l'arbre d'entrée de boîte de vitesses à denture extérieure, sachant que sa mobilité en direction du carter de boîte de vitesses est limitée par l'entraîneur (2, 102) côté moteur et/ou par une butée.

2. Unité d'actionnement d'embrayage selon la revendication 1, **caractérisée en ce qu'**au moins une partie de l'entraîneur (2, 5) côté moteur entoure avec sa douille extérieure (102, 105) l'entraîneur (1, 101) côté boîte de vitesses sur sa périphérie extérieure, **en ce qu'**au moins une partie du côté frontal tourné vers le moteur de l'entraîneur côté boîte de vitesses (1, 101) est réalisée comme une surface de contact avec un ressort d'embrayage, un composant portant le ressort d'embrayage, un plateau de pression d'embrayage ou une butée de débrayage.

3. Unité d'actionnement d'embrayage selon la revendication 1 ou 2, **caractérisée en ce que** l'entraîneur (2, 102) côté moteur est composé de deux composants (2, 5 ; 102, 105) reliés de manière solidaire en rotation par force, coopération de forme et/ou par liaison de matière, sachant que les rampes (15, 115) et les surfaces d'appui (16, 116) sont réalisées sur l'entraîneur (2, 102) et le second composant est réalisé comme une douille extérieure (5, 105) qui entoure sur la périphérie extérieure l'entraîneur (1, 101) côté boîte de vitesses.

4. Unité d'actionnement d'embrayage selon l'une quelconque des revendications précédentes, **caractérisée en ce que** respectivement une bille qui est guidée à force dans des rainures des rampes (15, 115) et des rampes antagonistes (19, 119), est disposée entre les rampes (15, 115) et les rampes antagonistes (19, 119).

5. Unité d'actionnement d'embrayage selon l'une quelconque des revendications précédentes, **caractérisée en ce que** l'entraîneur (2, 102) côté moteur et la douille extérieure (5, 105) sont réalisés comme un composant d'un seul tenant.

6. Unité d'actionnement d'embrayage selon l'une quelconque des revendications précédentes, **caractérisée en ce qu'**une butée de palier (3) qui est disposée de manière à pouvoir tourner sur l'arbre d'entrée de boîte de vitesses et est en contact avec l'anneau intérieur d'un palier de l'arbre d'entrée de boîte de vitesses, est prévue pour l'appui de l'entraîneur (2) côté moteur contre le carter de boîte de vitesses.

7. Unité d'actionnement d'embrayage selon la revendication 6, **caractérisée en ce qu'**une bague d'étanchéité d'arbre radial (12) qui rend étanche le carter de boîte de vitesses par rapport au carter d'embrayage, est disposée sur la surface périphérique extérieure de la butée de palier (3).

8. Unité d'actionnement d'embrayage selon la revendication 6 ou 7, **caractérisée en ce qu'**une garniture radiale, par exemple un joint torique (10) qui rend étanche le carter de boîte de vitesses par rapport au carter d'embrayage, est disposée sur la surface périphérique intérieure de la butée de palier (3).

9. Unité d'actionnement d'embrayage selon l'une quelconque des revendications précédentes, **caractérisée en ce qu'**une ou plusieurs plaques de butée (6) sont disposées sur l'arbre d'entrée de boîte de vitesses entre l'entraîneur (2) côté moteur et la butée de palier (3).

10. Unité d'actionnement d'embrayage selon l'une quelconque des revendications précédentes, **caractérisée en ce que** l'entraîneur (1) côté boîte de vitesses est précontraint dans le sens axial contre l'entraîneur (2) côté moteur par un élément élastique, par exemple un ressort en spirale (8).

11. Unité d'actionnement d'embrayage selon l'une quelconque des revendications précédentes, **caractérisée en ce que** l'entraîneur (2, 102) côté moteur ou sa douille extérieure (5, 105) est reliée de manière solidaire en rotation à un support de garniture d'embrayage.

12. Unité d'actionnement d'embrayage selon la revendication 11, **caractérisée en ce que** la liaison solidaire en rotation est réalisée par une denture de l'entraîneur (2, 102) côté moteur ou de sa douille extérieure (5, 105) et du support de garniture d'embrayage.

13. Unité d'actionnement d'embrayage selon l'une quelconque des revendications précédentes, **caractérisée en ce qu'**un poussoir de ressort (4, 104) en tant que composant séparé est prévu comme surface de contact entre l'entraîneur (1, 101) côté boîte de vitesses et le ressort d'embrayage, le composant portant le ressort d'embrayage, le plateau de pression d'embrayage ou la butée de débrayage.

14. Unité d'actionnement d'embrayage selon la revendication 13, **caractérisée en ce qu'**un palier (9, 109) est disposé entre l'entraîneur (1, 101) côté boîte de vitesses et le poussoir de ressort (4, 104).

15. Unité d'actionnement d'embrayage selon l'une quelconque des revendications précédentes, **caractérisée en ce que** l'entraîneur côté boîte de vitesses (101) est réalisé en deux parties, se composant d'une douille d'arbre (101a) à denture intérieure, disposée directement sur l'arbre d'entrée de boîte de vitesses et d'une douille intérieure (101b) disposée de manière à pouvoir tourner et mobile dans le sens axial à l'extérieur sur la douille d'arbre (101b).

16. Unité d'actionnement d'embrayage selon l'une quelconque des revendications précédentes, **caractérisée en ce que** la denture intérieure de la douille d'arbre (101a) est adaptée à la longueur de la denture extérieure de l'arbre d'entrée de boîte de vitesses de sorte que la douille d'arbre (101a) soit supportée par l'appui mutuel des extrémités de sortie des deux dentures si l'extrémité côté moteur de la douille d'arbre (101a) s'aligne à peu près avec l'extrémité côté moteur de l'arbre d'entrée de boîte de vitesses.

17. Unité d'actionnement d'embrayage selon la revendication 15, **caractérisée en ce que** le poussoir de ressort (104) avec son unité de palier (plaque de butée 209, palier axial 109 et butée de palier 210) est disposé sur la douille intérieure (101b).

18. Unité d'actionnement d'embrayage selon l'une quelconque des revendications précédentes, **caractérisée en ce qu'**un ressort en spirale (108) est disposé précontraint entre la douille intérieure (101b) et une douille extérieure (105) comportant la douille intérieure (101b).

19. Unité d'actionnement d'embrayage selon la revendication 15, **caractérisée en ce que** les rampes (115) de l'entraîneur (102) côté moteur et les rampes antagonistes (119) concourantes de la douille intérieure (101b) présentent un revêtement de surface réduisant la friction ou des rainures, dans lesquelles est disposée respectivement une bille de roulement.

20. Unité d'actionnement d'embrayage selon l'une quelconque des revendications 15 à 19, **caractérisée en ce que** les surfaces d'appui (116) de l'entraîneur (102) côté moteur et les surfaces d'appui antagonistes (120) concourantes de la douille intérieure (101b) présentent un revêtement de surface réduisant la friction ou des rainures, dans lesquelles est disposée respectivement une bille de roulement.
